Europäisches Patentamt

European Patent Office

Office européen des brevets

(11) Veröffentlichungsnummer: **0 297 488**
**A2**

## (12) EUROPÄISCHE PATENTANMELDUNG

(21) Anmeldenummer: 88110242.0

(22) Anmeldetag: 28.06.88

(51) Int. Cl.⁴: **B27G 5/02 , B27M 3/12**

(30) Priorität: 03.07.87 DE 3722027

(43) Veröffentlichungstag der Anmeldung:
**04.01.89 Patentblatt 89/01**

(84) Benannte Vertragsstaaten:
**AT BE CH DE ES FR GB GR IT LI LU NL SE**

(71) Anmelder: **Quad, Frank**
**Schulstrasse 13**
**D-5239 Alpenrod(DE)**

(72) Erfinder: **Quad, Frank**
**Schulstrasse 13**
**D-5239 Alpenrod(DE)**

(54) **Schneidvorrichtung zur Herstellung von Gehrungsschnitten, vorzugsweise an geraden Treppenwangen.**

(57) Die Erfindung betrifft eine Schneidvorrichtung zur Ausführung von präzisen Sage- und Gehrungsschnitten an Werkstücken, insbesondere Treppenwangen.Die Schneidvorrichtung weist dazu eine Führungs- und Schwenkvorrichtung (2) auf, innerhalb der eine motorisch betriebene Säbelsäge (3) angeordnet ist.Die Führungs- und Schwenkvorrichtung (2) wiederum ist verschiebbar auf einer Trageinrichtung (67) gelagert,an der gleichzeitig eine Werkstückauflage (10) vertikal verschiebbar angeordnet ist.

- Fig 1 -

EP 0 297 488 A2

# Schneidvorrichtung zur Herstellung von Gehrungsschnitten, vorzugsweise an geraden Treppenwangen

Die Erfindung betrifft eine Schneidvorrichtung zur Herstellung von Gehrungsschnitten, vorzugsweise an geraden Treppenwangen, mit einer Führungs- und Schwenkvorrichtung für eine Hubsäge, insbesondere eine motorisch betriebene Säbelsäge, wobei eine Aufnahme für die Hubsäge innerhalb eines Rahmens angeordnet ist, der gebildet wird aus einem linken und einem rechten vertikalen Rahmenteil und einer unteren und einer oberen plattenförmigen Quertraverse.

Treppen dienen seit jeher zur Überwindung von Höhenunterschieden. Im modernen Hausbau haben sich neben Steintreppen vor allem Holztreppen durchgesetzt. Holztreppen mit zwei Treppenwangen und aufgesattelten Stufen spielen dabei eine vorrangige Rolle. Bei diesem Treppentyp haben die holzverarbeitenden Betriebe von jeher Schwierigkeiten, Sägeschnitte für die Aussparungen der Stufenauflagen bei ausreichender Genauigkeit rationell herzustellen. Meistens werden diese Sägeschnitte nach Anriß per Hand bzw. mit einer Handkreissäge oder einer Handhubsäge ausgeführt. Sägeschnitte, die mit einer Handkreissäge ausgeführt werden, haben dabei den Nachteil, daß sie entsprechend dem Sägeblattdurchmesser einen Auslauf aufweisen, der umständlich von Hand nachgearbeitet werden muß. Besondere Schwierigkeiten ergeben sich dann, wenn die Gestaltung der Treppe die Ausführung der Sägeschnitte als Gehrungsschnitte erforderlich mächt. Bei größeren Wangendicken und Gehrungswinkeln ist dann der Einsatz von Handkreissägen nicht mehr möglich,und Handsägen bzw. Handhubsägen ergeben, wenn man die gesamte erforderliche Schnittlänge und -tiefe betrachtet, durch ungenügende Führung des Sägeblattes einen unsauberen und ungenauen Schnitt.

Vom bekannten Stand der Technik ausgehend, liegt der Erfindung die Aufgabe zugrunde, eine kostengünstige Schneidvorrichtung zur Herstellung von Gehrungsschnitten nach der Art einer Hubsäge anzugeben, die eine exakte, genaue Schnittführung bei sauberen Schnittflächen selbst bei extremen (großen) Gehrungswinkeln erlaubt. Darüberhinaus soll sie leicht demontier- und transportierbar ausgeführt sein. Außerdem sollen alle Gehrungsschnitte möglichst in einer Aufspannung der Treppenwange ausführbar sein.

Die Aufgabe wird erfindungsgemäß dadurch gelöst, daß eine innerhalb eines Rahmens angeordnete Aufnahme für eine Hubsäge an einer vertikalen Stangenführung angeordnet ist, die axial verschiebbar und drehbar in der oberen Quertraverse des Rahmens gelagert ist, und daß der Rahmen in einer vertikalen Ebene verschwenkbar an einem Support angeordnet ist, der auf einer horizontalen Führung verfahrbar ist.

Weitere Merkmale der Erfindung ergeben sich aus den Ansprüchen in Verbindung mit der Zeichnung.

Die mit der Erfindung erzielten Vorteile bestehen insbesondere darin, daß durch die Anordnung einer Hubsäge in einer Führungs- und Schwenkvorrichtung eine exakte Schnittführung über die gesamte Schnittlänge erreicht wird, selbst bei größeren Gehrungswinkeln. Ein großer, einzigartiger Verstellbereich, bis jeweils 65° von der Nullage, wird dadurch erreicht, daß die Schwenkachse der Hubsägenaufnahme nahe an der zu bearbeitenden Wange angeordnet ist und mit der Mittelachse der hinteren Stangenführung zusammenfällt. Außerdem ist es gelungen, durch eine verschiebbare, jeweils auf die Wangendicke einstellbare Führung für das freie Ende des Sägeblattes, ein Verlaufen des Sägeblattes unmöglich zu machen.

Darüberhinaus garantiert eine Rollenführung, die während des Schneidvorganges an einer Wangenseite abrollt, in Verbindung mit ihren auch seitlich geführten Rollen einen präzisen und vibrationsfreien Schneidvorgang, auch bei starker Neigung der Führungs- und Schwenkvorrichtung. Ein nicht zu verachtender Vorteil besteht darin, daß mittelständigen Treppenherstellern und auch kleinen Schreinereibetrieben eine motorisch betriebene, kostengünstige Schneidvorrichtung an die Hand gegeben wird, die eine rationale Ausführung von Gehrungsschnitten bei hoher Genauigkeit erlaubt.

Ein Ausführungsbeispiel der Erfindung ist in der Zeichnung dargestellt und wird im folgenden näher beschrieben.

Es zeigen:

Fig. 1 Eine perspektivische Gesamtansicht

Fig. 2 Schnittdarstellung gemäß dem Schnittverlauf II II in Fig. 1

Fig. 3 Frontansicht

Fig. 4 Draufsicht der horizontalen Schwenkeinrichtung

Fig. 5 Rückansicht des Support und der vertikalen Schwenkeinrichtung

Fig. 6 Schnittdarstellung gemäß dem Schnittverlauf VI VI in Fig.1

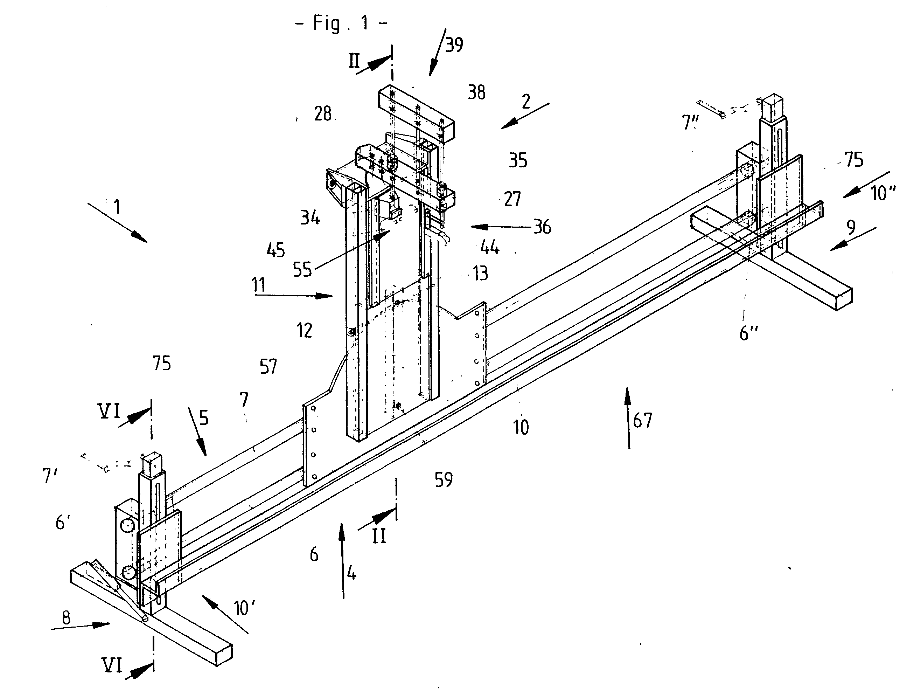

In Fig. 1 ist die erfindungsgemäße Schneidvorrichtung 1 für Treppenwangen in perspektivischer Ansicht gezeigt.

Eine Führungs- und Schwenkvorrichtung 2 für eine Hubsäge 3, insbesondere eine Säbelsäge, ist vertikal verschwenkbar an einem Support 4 angeordnet, der auf einer Horizontalführung 5 verschiebbar gelagert ist. Die Horizontalführung 5 besteht aus zwei parallelen Führungsstangen 6, 7 mit kreisförmigem Querschnitt, die mit ihren Enden 6', 7', 6", 7" an einer linken und einer rechten Stütze 8, 9 befestigt sind. Unterhalb der Horizontalführung 5 ist eine Werkstückauflage 10 vertikal verschiebbar an den Stützen 8, 9 angeordnet.

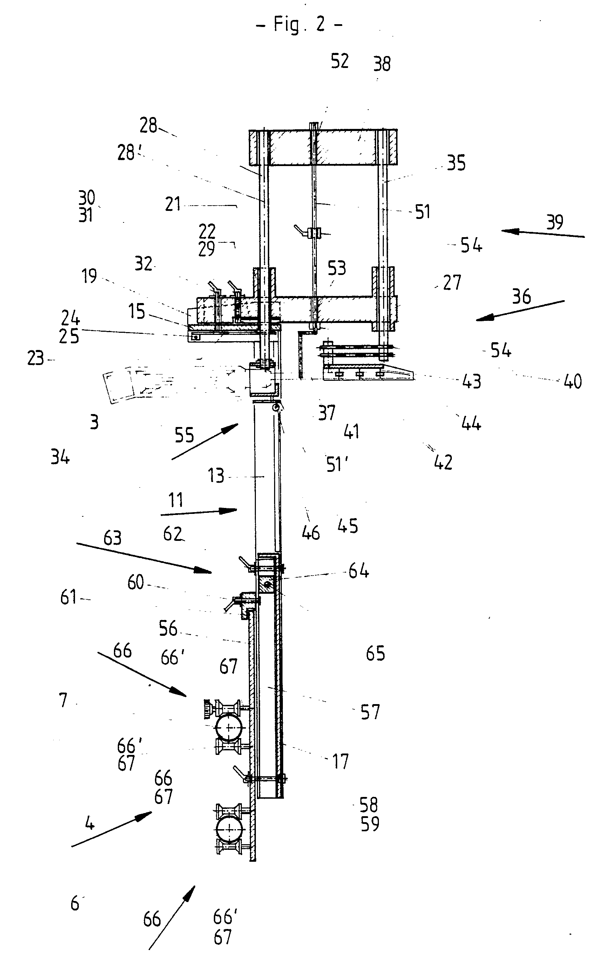

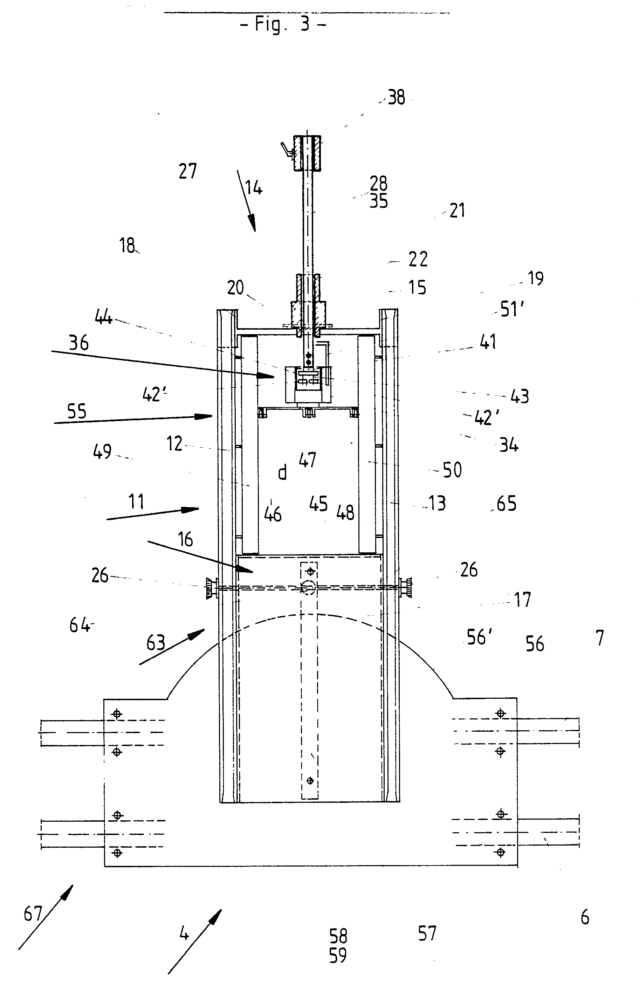

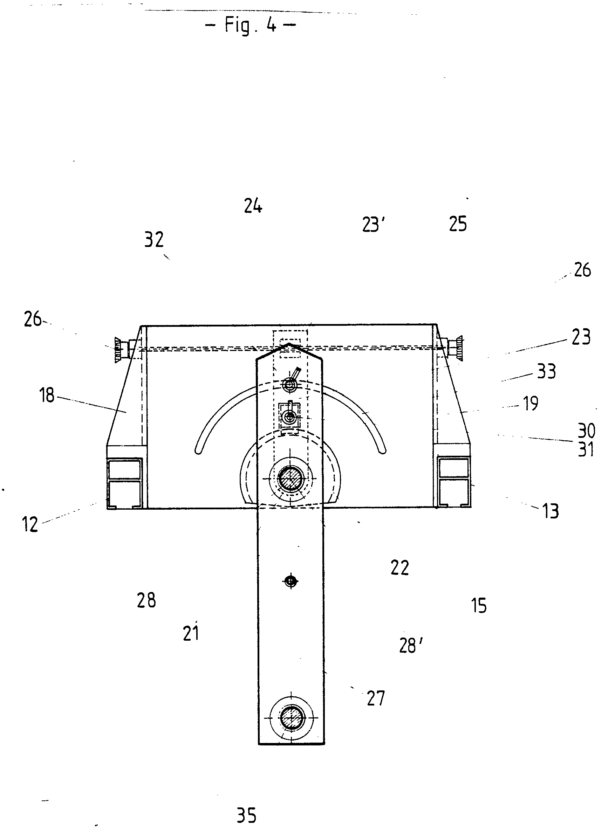

In Fig. 2 und 3 ist die Führungs- und Schwenkvorrichtung 2 genauer dargestellt, sie weist einen Rahmen 11 auf, der gebildet wird aus einem linken und einem rechten vertikalen Rahmenteil 12, 13, einer oberen Quertraverse 14, die als horizontale Schwenkplatte 15 und einer unteren Quertraverse 16, die als vertikale Schwenkplatte 17 ausgebildet ist. Zur Verstärkung ist die obere Schwenkplatte 15 mittels Seitenteilen 18, 19 mit den vertikalen Rahmenteilen 12, 13 verbunden. Mittig zu den vertikalen Rahmenteilen 12, 13 weist die obere Schwenkplatte 15 eine Zentrierbohrung 20 auf, in der eine Büchse 21 drehbar gelagert ist. Die Büchse 21 - in Fig. 4 genauer dargestellt - stützt sich mit einem segmentförmigen Bund 22 auf der Schwenkplatte 15 ab. Unterhalb der Schwenkplatte 15 ist auf der Büchse 21 ein Arm 23 verdrehfest geklemmt, der die Büchse 21 gegen axiales Verschieben in der Zentrierbohrung 20 sichert. Am hinteren Ende 23' des Armes 23 ist beweglich eine Spindelmutter 24 angelenkt, die auf einer Gewindespindel 25 läuft. Die Gewindespindel 25 ist wiederum drehbar in den beiden Seitenteilen 18, 19 gelagert und mittels innen angeordneten, aber nicht gezeigten Stellringen und außen positionierten Drehgriffen 26 gegen axiales Verschieben gesichert. Ein Verdrehen der Gewindespindel 25 bewirkt über die Spindelmutter 24 und den Arm 23 eine feinfühlige radiale Verdrehung der Büchse 21. Die Büchse 21 dient sowohl als Zentrierzapfen für einen oberen Schwenkarm 27, der verschwenkbar auf der oberen Schwenkplatte 15 aufliegt, als auch als Führungslager für eine erste Führungsstange 28. Der Bund 22 der Büchse 21 ist dabei in einer Aussparung 29 des Schwenkarmes 27 frei drehbar aufgenommen und dort mittels eines Klemmstückes 30 einer im Schwenkarm 27 angeordneten Klemmeinrichtung 31 zum oberen Schwenkarm 27 fixierbar. Der obere Schwenkarm 27 weist außerdem eine Klemmeinrichtung 32 auf, die mit einem Nutenstein (nicht gezeigt) in eine, kreisbogenförmig in der oberen Schwenkplatte 15 angeordnete Nut 33 eingreift. Mit der Klemmeinrichtung 32 ist der obere Schwenkarm 27 zur oberen Schwenkplatte 15 fixierbar.

Die erste Führungsstange 28 ist drehbar und axial verschiebbar in der Büchse 21 geführt und trägt an ihrem unteren Ende eine Aufnahme 34, in der eine handelsübliche, motorisch betriebene Säbelsäge 3 befestigt ist. Beabstandet aber parallel zur ersten Führungsstange 28 ist eine zweite Führungsstange 35 angeordnet. Diese ist axial verschiebbar im oberen Schwenkarm 27 gelagert und trägt an ihrem unteren Ende eine Führungseinrichtung 36 zum Führen des freien Endes des Sägeblattes 37 der Säbelsäge 3. Die beiden Führungsstangen 28, 35 sind an ihren oberen Enden mittels eines Jochs 38 starr gekoppelt und bilden mit diesem zusammen eine vertikal verschiebbare Parallelführung 39, wobei das Joch 38 parallel zum oberen Schwenkarm 27 ausgerichtet ist.

Die Führungseinrichtung 36 weist zwei horizontal ausgerichtete, parallele Stangen 40 auf, die horizontal in der Flucht des Sägeblattes 37 verschieb- und arretierbar in der zweiten Führungsstange 35 gelagert sind. Am vorderen Ende der Stangen 40 ist ein Rollenhalter 41 befestigt, der drei Rollenpaare 42 trägt. Die Rollenpaare 42 sind in Flucht des Sägeblattes 37 ausgerichtet, so daß jedes Rollenpaar 42 zwischen seinen Rollen 42' einen Führungsspalt "d" bildet, in dem das freie Ende des Sägeblattes 37 möglichst spielfrei geführt ist. Die Rollen 42' sind mit Exzenterbolzen 43 am Rollenhalter 41 befestigt, wodurch eine Einstellbarkeit des Führungsspaltes "d" gegeben ist. Am Rollenhalter 41 ist außerdem ein u-förmig ausgebildetes Schutzblech 44 angebracht, welches die Führungsrollen 42' und das freie Ende des Sägeblattes 37 abdeckt. Die Führungseinrichtung 36 wird im Betrieb möglichst nahe an die Treppenwange herangeschoben und arretiert, so daß das Sägeblatt 37 immer optimal geführt ist.

Zur Unterstützung der Parallelführung 39 in vertikaler Richtung ist eine zusätzliche Führungseinrichtung 55 vorgesehen. Dazu ist unter der Aufnahme 34 eine Querleiste 45 drehbar befestigt, die drei Rollen 46, 47, 48 trägt, welche beim Sägevorgang am Werkstück anliegen und auf diesem abrollen. Die beiden äußeren Rolle 46, 48 werden zusätzlich seitlich von Führungsschienen 49, 50 geführt, die im Rahmen 11 und parallel zu den vertikalen Rahmenteilen 12, 13 angeordnet sind. Es versteht sich von selbst, daß die Führungsschienen 49, 50 im Abstand von und im Winkel zueinander einstellbar sind, und daß die Drehachse der Querleiste 45 in Flucht der Mittellinie 28' der ersten Führungsstange 28 liegt.

Zwischen den Führungsstangen 28, 35 und weitgehend parallel zu diesen ist ein Schnittlängenbegrenzer 51 positioniert. Er ist in Bohrungen 52, 53 des Schwenkarmes 27 und des Jochs 38 verschiebbar gehalten und trägt zwei Klemmanschläge 54. Zum besseren Handhaben, besonders bei dünnen Werkstücken, ist der Schnittlängenbegrenzer 51 an seinem unteren Ende 51' abgewinkelt ausgebildet.

Oberhalb der Aufnahme 34 ist an der ersten Führungsstange 28 ein nicht gezeigter Bund ausgebildet, der mit einer unmittelbar unter der oberen Schwenkplatte 15 angeordneten, aber nicht gezeigten Halteeinrichtung, die ver- und entriegelbar ist, zusammenarbeitet. Mit dieser Halteeinrichtung ist die Parallelführung 39 inklusive Aufnahme 34, Säbelsäge 3 und Führungseinrichtungen 36, 55 in einer hochgefahrenen Stellung (Außerbetriebstellung) fixierbar, wobei allerdings die seitliche Verschwenkbarkeit der Parallelführung 39 und des oberen Schwenkarmes 27 nicht beeinträchtigt ist.

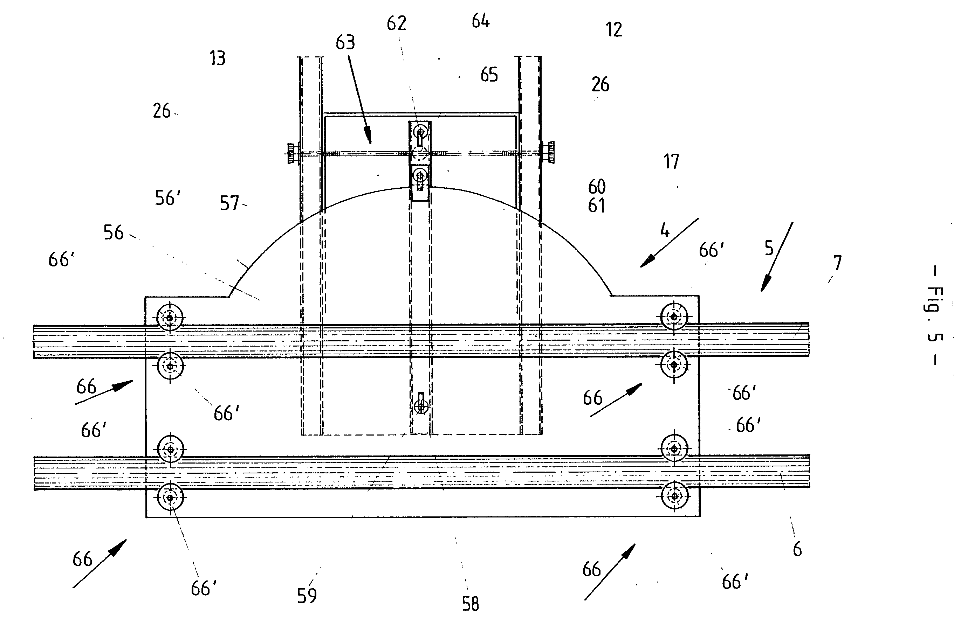

Wie eingangs erwähnt, ist die Führungs- und Schwenkvorrichtung 2 in einer vertikalen Ebene verschwenkbar am Support 4 angeordnet. Dies ist deutlich in den Figuren 2 und 5 dargestellt. Der Support 4 weist eine vertikal ausgerichtete Wand 56 auf, auf der ein unterer Schwenkarm 57 angeordnet ist. Der untere Schwenkarm 57 und die untere Schwenkplatte 17 des Rahmens 11 sind mit einem gemeinsamen Zentrierbolzen 58, um eine gemeinsame Zentrierachse 59 schwenkbar an der Wand 56 gehalten. Der Zentrierbolzen 58 ist dabei als Klemmschraube ausgebildet, mittels dieser der untere Schwenkarm 57 und die untere Schwenkplatte 17 auf der Wand 56 fixierbar sind. Der untere Schwenkarm 57 ist zusätzlich mit Hilfe einer Klemmeinrichtung 60, die mit einem Klemmstück 61 einen bogenförmig ausgebildeten Rand 56' der Wand 56 umgreift, auf der Wand 56 gesichert. Die untere Schwenkplatte 17 wiederum ist mit einer Klemmeinrichtung 62 auf dem unteren Schwenkarm 57 arretierbar, wozu sie einen nicht dargestellten bogenförmigen Schlitz aufweist.

Der untere Schwenkarm 57 ist zusätzlich mit einer Zug spindeleinheit 63 mit dem Rahmen 11 verbunden. Dazu ist im unteren Schwenkarm 57, der einen Querschnitt in Form eines Rechteckrohres aufweist, eine Spindelmutter 64 beweglich angeordnet. Diese Spindelmutter 64 läuft auf einer Zugspindel 65, die in den vertikalen Rahmenteilen 12, 13 drehbar gelagert ist. Die Zugspindel 65 ist mittels innen am Rahmen 11 und außen am Rahmen 11 angeordneten Stellringen (nicht gezeigt) bzw. Drehgriffen 26 gegen axiales Verschieben gesichert. Bei gelöster Klemmeinrichtung 62 ist der gesamte Rahmen 11 - durch Drehen der Zugspindel 65 - in seiner Lage relativ zum unteren Schwenkarm 57 feinfühlig verschwenkbar.

Der Support 4 ist ausgerüstet mit zwei oberen und zwei unteren Rollenpaaren 66. Mit deren Hilfe ist die vertikal ausgerichtete Wand 56 auf den parallelen Führungsstangen 6, 7 der Horizontalführung 5 gelagert und geführt. Die Rollenpaare 66, welche die Führungsstangen 6, 7 umgreifen, werden gebildet aus je zwei gegenüberliegenden Rollen 66', die jeweils einen weitgehend diaboloförmigen Querschnitt aufweisen. Die Rollen 66' sind mittels Bolzen 67 frei drehbar an der Wand 56 befestigt. Vorzugsweise sind die Bolzen 67 als Exzenterbolzen ausgebildet, so daß die Rollen 66' im Abstand zueinander und die Rollenpaare 66 in der Flucht der Führungsstangen 6, 7 einstellbar sind.

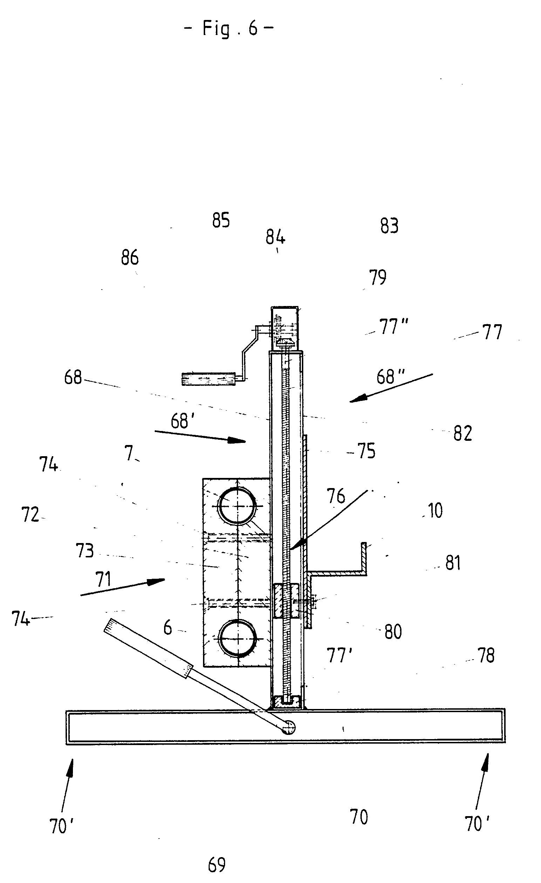

Die zwei parallelen Führungsstangen 6, 7 der Horizontalführung 5 werden an ihren Enden 6', 6", 7', 7" von den Stützen 8, 9 getragen und bilden mit diesen zusammen eine Trageinrichtung 67 für die Führungs- und Schwenkvorrichtung 2. Da beide Stützen 8, 9 spiegelbildlich ausgeführt sind und die gleichen Bauteile aufzeigen, wird nur die linke, in Fig. 6 gezeigte Stütze 8 beschrieben.

Die Stütze 8 ist ausgestattet mit einem vertikalen Stab 68, an dem mittels eines Schnellklemmelementes 69 ein Fuß 70 schwenkbar befestigt ist. Auf der einen Seite 68' des Stabes 68 ist ein Klemmlager 71 zur Aufnahme der horizontalen Führungsstangen 6, 7 befestigt, während auf der gegenüberliegenden Seite 68" des Stabes 68 eine Anlageplatte 75 vertikal verschiebbar angeordnet ist. Das Klemmlager 71 ist getrennt ausgeführt und besteht aus einem Basisteil 72, welches fest mit dem Stab 68 verbunden ist und einem Klemmteil 73, welches mit Schrauben 74 am Basisteil 72 befestigt ist. Durch Anziehen der Schrauben 74 sind die Führungsstangen 6, 7 im Klemmlager 71 fixiert.

Die Anlageplatte 75 ist durch eine Spindeleinrichtung 76, die innerhalb des röhrenförmig gestalteten Stabes 68 angeordnet ist, auf und ab bewegbar. Die Spindel 77 der Spindeleinrichtung 76 ist mit ihrem unteren Ende 77' in einem Stützlager 78 aufgenommen und mit ihrem oberen Ende 77" in einem Lager 79 radial geführt. Auf der Spindel 77 läuft eine Spindelmutter 80, an der mit Schrauben 81, die einen vertikalen Schlitz 82 des Stabes 68 durchragen, die Anlageplatte 75 befestigt ist. Die Spindel 77 wird angetrieben von einem Winkeltrieb 83, der in einem Gehäuse 84 am oberen Ende des Stabes 68 angeordnet ist. Aus der zum Klemmlager 71 hin gerichteten Seite des Gehäuses 84 ragt ein Zapfen 85 des Winkeltriebes 83 heraus, auf welchem eine Handkurbel 86 abnehmbar befestigt ist.

Die Stützen 8, 9 der Trageinrichtung 67 sind derart positioniert, daß ihre Anlageplatten 75 mit der Frontseite des Rahmens 11 in der gleichen Flucht liegen, und dabei in einer vertikalen Ebene liegen, die sich parallel zu den Führungsstangen 6, 7 erstreckt. Zur Aufnahme des Werkstückes ist eine z-förmig ausgebildete Werkstückauflage 10 vorgesehen, die sich über die gesamte Länge der Trageinrichtung 67 erstreckt. Die Werkstückauflage 10 ist in ihren Endbereichen 10', 10" an den Anlageplatten 75 befestigt und kann deshalb sowohl vertikal verschoben, als auch in ihrem Neigungswinkel zur Horizontalen verstellt werden.

Die Füße 70 der Stützen 8, 9 weisen in ihren Endbereichen 70' nicht dargestellte Stellschrauben auf, womit sie sich auf dem Boden abstützen.

Dadurch wird erreicht, daß die Trageinrichtung 67 immer einen soliden Stand hat und während des Betriebes nicht wackelt oder schaukelt.

Zum Transport wird die Führungs- und Schwenkvorrichtung 2 von der Trageinrichtung 67 getrennt. Dazu ist die Parallelführung 39 inklusive Säbelsäge 3, Aufnahme 34 und Sägeblattführung 36 innerhalb des Rahmens 11 in ihrer Außerbetriebstellung zu arretieren. Sodann ist durch Lösen des Zentrierbolzens 58 und der Klemmeinrichtung 60 die Führungs- und Schwenkeinrichtung 2 vom Support 4 zu trennen. Bei der Trageinrichtung 67 sind alsdann zum besseren Handhaben beim Transport die Füße 70 um 90° zu schwenken in eine Ebene mit den Stäben 68 und Tragstangen 6, 7.

Im Anschluß ist die Funktionsweise der Schneidvorrichtung 1 kurz beschrieben:

Auf einer vorgefertigten Treppenwange werden die Aussparungen zur Auflage der Treppenstufen, auch evtl. notwendige Gehrungsschnitte, angezeichnet. Die so vorbereitete Treppenwange (nicht gezeigt) wird auf die Werkstückauflage 10 gegeben, mit dieser zusammen grob ausgerichtet und mittels Spannelementen (nicht gezeigt) an den Anlageplatten 75 der Stützen 8, 9 befestigt. Sodann wird die Führungs- und Schwenkvorrichtung 2 in der benötigten Schräglage grob ausgerichtet. Dazu ist der Zentrierbolzen 58 und die Klemmeinrichtung 60 zu lösen, die Führungs- und Schwenkvorrichtung 2 in die gewünschte Lage zu schwenken und die Klemmeinrichtung 60 anschliegend wieder anzuziehen. Eine genaue Ausrichtung gemäß dem gewünschten Schnittverlauf wird dann mittels der Zugspindeleinrichtung 63 vorgenommen. Danach ist die Führungs- und Schwenkvorrichtung 2 durch Anziehen des Zentrierbolzens 58 und der Klemmeinrichtung 62 in dieser Position an der Wand 56 zu sichern.

Nun wird das Sägeblatt 37 der Säbelsäge 3 im benötigten Gehrungswinkel grob ausgerichtet und in dieser Stellung gesichert. Dazu wird mittels der Klemmeinrichtung 31 der obere Schwenkarm 27 zum Bund 22 der Büchse 21 fixiert. Danach wird die Halteeinrichtung gelöst und die Parallelführung 39 mit der Säbelsäge 3 abgesenkt. Durch Verschieben des Supports 4 wird das Sägeblatt 37 auf den angezeichneten Schnittanfang gesetzt und dort mittels der Gewindespindel 25 im Gehrungswinkel genau ausgerichtet. Sodann wird die Führungs- und Schwenkvorrichtung 2 mittels nicht gezeigten Spannelementen zur Treppenwange festgelegt und der obere Schwenkarm 27 durch Anziehen der Klemmeinrichtung 32 in seiner Position zur oberen Schwenkplatte 15 fixiert.

Vor Beginn des Sägeschnittes ist jetzt nur noch die Sägeblattführung 36 entsprechend der Wangenstärke einzustellen und der Schnittlängenbegrenzer 51 auf das Maß der benötigten Schnittlänge. Insofern sich Schnittlänge, Gehrungswinkel und Schräglage der auszuführenden Gehrungsschnitte nicht ändern, ist für jeden weitern Schnitt nur die Führungs- und Schwenkeinrichtung 2 von der Treppenwange zu lösen, mit dem Support 4 eine Stufenteilung zu verfahren und in der neuen Position durch Aktivieren der Spannelemente wieder zur Treppenwange zu fixieren.

Als Spannelemente können in der einfachsten Ausführung Schraubzwingen dienen, bevorzugt werden aber Pneumatik- bzw. Vakuumspannelemente angewendet.

Zum leichten Einstellen der Schräglage bzw. des Gehrungswinkels weisen die Wand 56 und die obere Schwenkplatte 15 radial angeordnete Winkelskalierungen auf. Für den gleichen Zweck trägt der Schnittlängenbegrenzer 51 eine metrische Skalierung.

Es versteht sich von selbst, daß noch mannigfaltige Abwandlungen möglich sind, ohne von dem grundsätzlichen Erfindungsgedanken abzuweichen.

## Ansprüche

1. Schneidvorrichtung zur Herstellung von Gehrungsschnitten, vorzugsweise an geraden Treppenwangen, mit einer Führungs- und Schwenkvorrichtung für eine Hubsäge, insbesondere eine motorisch betriebene Säbelsäge, wobei eine Aufnahme für die Hubsäge innerhalb eines Rahmens angeordnet ist, der gebildet wird aus einem linken und einem rechten vertikalen Rahmenteil und einer unteren und einer oberen plattenförmigen Quertraverse, dadurch gekennzeichnet, daß die Aufnahme (34) an einer vertikalen Führungsstange (28) befestigt ist, die axial verschiebbar und drehbar in der oberen Quertraverse (14) des Rahmens (11) gelagert ist, und daß der Rahmen (11) in einer vertikalen Ebene verschwenkbar an einem Support (4) angeordnet ist, der auf einer Horizontalführung (5) verfahrbar ist.

2. Schneidvorrichtung nach Anspruch 1, dadurch gekennzeichnet, daß die obere Quertraverse (14) des Rahmens (11) als horizontal ausgerichtete Schwenkplatte (15) ausgebildet ist, die einen Schwenkarm (27) trägt, der um eine gedachte Mittellinie (28') schwenkbar ist, die mit der Mittelachse der Führungsstange (28) zusammenfällt, und daß der Schwenkarm (27) mindestens mittels einer Klemmeinrichtung (31, 32) in bestimmten Winkelstellungen auf der Schwenkplatte (15) fixierbar ist.

3. Schneidvorrichtung nach den Ansprüchen 1 und 2, dadurch gekennzeichnet, daß beabstandet zur Führungsstange (28) eine Führungsstange (35) parallel angeordnet ist, wobei die beiden Führungsstangen (28, 35) mit ihren oberen Enden mittels eines Jochs (38) starr gekoppelt sind, welches in zwei Richtungen parallel zum Schwenkarm (27) ausgerichtet ist, und daß die Führungsstange (35) axial verschiebbar im Schwenkarm (27) gelagert ist.

4. Schneidvorrichtung nach Anspruch 3, dadurch gekennzeichnet, daß die beiden Führungsstangen (28, 35) inklusive dem Joch (38) eine vertikal verschiebbare Parallelführung (39) bilden.

5. Schneidvorrichtung nach Anspruch 3, dadurch gekennzeichnet, daß am unteren Ende der Führungsstange (35) eine Führungseinrichtung (36) für ein Sägeblatt (37) der Hubsäge (3) angeordnet ist.

6. Schneidvorrichtung nach Anspruch 5, dadurch gekennzeichnet, daß die Führungseinrichtung (36) horizontal in der Flucht des Sägeblattes (37), entsprechend der Dicke des Werkstückes, verschiebbar und arretierbar ist.

7. Schneidvorrichtung nach den Ansprüchen 3 bis 6, dadurch gekennzeichnet, daß die Führungseinrichtung (36) mindestens eine Stange (40) aufweist, die in der Flucht des Sägeblattes (37) horizontal verschiebbar und arretierbar in der Führungsstange (35) gelagert ist, und daß am vorderen Ende der Stange (40) ein Rollenhalter (41) befestigt ist, der mindestens ein Rollenpaar (42) trägt, welches einen Führungsspalt "d" definiert, in welchem das Sägeblatt (37) geführt ist.

8. Schneidvorrichtung nach Anspruch 7, dadurch gekennzeichnet, daß Rollen (42') des Rollenpaares (42) mittels Exzenterbolzen (43) am Rollenhalter (41) befestigt sind, wodurch der Führungsspalt "d" einstellbar ist.

9 Schneidvorrichtung nach Anspruch 2, dadurch gekennzeichnet, daß der Schwenkarm (27) zwei Büchsen (21') aufweist, in denen die Führungsstangen(28) und (35) axial verschiebbar geführt sind.

10. Schneidvorrichtung nach Anspruch 9, dadurch gekennzeichnet, daß der Schwenkarm (27) mittels einem freien Ende der Büchse (21'), welche als Zentrierzapfen dient, in eine Bohrung (20) der Schwenkplatte (15) drehbar gelagert ist.

11. Schneidvorrichtung nach Anspruch 10, dadurch gekennzeichnet, daß die Führungsstange (28) in der Büche (21') gegen Verdrehung gesichert, jedoch axial verschiebbar geführt ist.

12. Schneidvorrichtung nach Anspruch 2, dadurch gekennzeichnet, daß in der Schwenkplatte (15) eine Büchse (21) angeordnet ist, die sowohl als axiale Führung für die Führungsstange (28) als auch als Zentrierzapfen für den Schwenkarm (27) dient.

13. Schneidvorrichtung nach Anspruch 1, dadurch gekennzeichnet, daß unter der Aufnahme (34) eine Querleiste (45) drehbar befestigt ist, die mindestens zwei Rollen (46, 47, 48) trägt, die während des Sägevorganges am Werkstück anliegen und die zusammen mit zwei seitlich im Rahmen (11) und weitgehend parallel zu den seitlichen Rahmenteilen (12, 13) angeordneten Führungsschienen (49, 50) als zusätzliche Führungseinrichtung (55) dienen.

14. Schneidvorrichtung nach Anspruch 3, dadurch gekennzeichnet, daß zwischen den Führungsstangen (28) und (35) und parallel zu diesen ein stangenförmiger Schnittlängenbegrenzer (51) angeordnet ist, der in Bohrungen (52, 53) des Schwenkarmes (27) und des Joches (38) verschiebbar gehalten ist, und der mindestens einen, vorzugsweise zwei verstellbare und arretierbare Klemmanschläge (54) trägt.

15. Schneidvorrichtung nach Anspruch 1, dadurch gekennzeichnet, daß die untere Quertraverse (16) des Rahmens (11) als vertikal ausgerichtete Schwenkplatte(17) ausgebildet ist, und daß der Support (4) eine vertikal ausgerichtete Wand (56) aufweist, auf der ein Schwenkarm (57) angeordnet ist, der zusammen mit der Schwenkplatte (17) des Rahmens (11) mittels eines leicht lösbaren Zentrierbolzens (58) verschwenkbar auf der Wand (56) gehalten ist, und daß mindestens eine Klemmeinrichtung (60, 62) vorgesehen ist, mit deren Hilfe die Schwenkplatte (17) und der Schwenkarm (57) in bestimmten Winkelstellungen auf der Wand (56) fixierbar sind.

16. Schneidvorrichtung nach Anspruch 15, dadurch gekennzeichnet, daß der Rahmen (11) mittels einer Zugspindeleinheit (63) in seiner Stellung relativ zum Schwenkarm (57) einstellbar ist.

17. Schneidvorrichtung nach Anspruch 1, dadurch gekennzeichnet, daß die Horizontalführung (5) Führungsstangen (6, 7) aufweist, die mit ihren Enden (6', 6", 7', 7") an Stützen (8, 9) befestigt sind.

18. Schneidvorrichtung nach Anspruch 17, dadurch gekennzeichnet, daß unterhalb der Horizontalführung (5) eine Werkstückauflage(10) vertikal verstellbar an den Stützen (8, 9) angeordnet ist, die sowohl parallel als auch geneigt zur Horizontalführung (5) ausrichtbar ist.

19. Schneidvorrichtung nach Anspruch 1, dadurch gekennzeichnet, daß der Support (4) motorisch oder mittels eines mit einem Druckmittel beaufschlagbaren Zylinders positionsgenau auf der Führung verfahrbar ist.

20. Schneidvorrichtung nach Anspruch 1 und 4, dadurch gekennzeichnet, daß die Parallelführung (39) zusammen mit der Aufnahme (34) und der Hubsäge (3) motorisch oder mittels eines mit einem Druckmittel beaufschlagbaren Zylinders verschiebbar ist, wodurch sich der Schnittvorschub der Hubsäge (3) ergibt, und wobei die Klemmanschläge (54) in Verbindung mit mindestens einem Endschalter für die Einhaltung der Schnittiefe sorgen.

21. Schneidvorrichtung nach den Ansprüchen 1 bis 3, dadurch gekennzeichnet, daß die Führungsstange (28) oberhalb der Aufnahme (34) einen Bund aufweist, an dem sie mittels einer unterhalb der Schwenkplatte (10) angeordneten ver- und entriegelbaren Halteeinrichtung in einer Außerbetriebstellung fixierbar ist.

22. Schneidvorrichtung nach Anspruch 12, dadurch gekennzeichnet, daß die Büchse (21) sowohl in der Schwenkplatte (15) als auch im Schwenkarm (27) drehbar angeordnet ist, und daß sie mit einem Bund (22) auf der Schwenkplatte (15) abgestützt und mit einem Arm (23) gegen axiales Verschieben relativ zur Schwenkplatte (15) gesichert ist, wobei der Bund (22) und der Arm (23) drehfest mit der Büchse (21) verbunden sind, und daß der Arm (23) eine bewegliche Spindelmutter (24) trägt, die auf einer Gewindespindel (25) verstellbar angeordnet ist, wobei die Gewindespindel (25) im Rahmen (11) drehbar gelagert ist, und daß der Schwenkarm (27) mittels einer Klemmeinrichtung (31) zum Bund (22) der Büchse (21) fixierbar ist.

23. Schneidvorrichtung nach Anspruch 7, dadurch gekennzeichnet, daß die Rollen (42') des Rollenpaares (42) mittels Bolzenschrauben (43'), die in Langlöchern verschiebbar sind, am Rollenhalter (41) befestigt sind, wodurch der Führungsspalt "d" einstellbar ist.

- Fig. 1 -

– Fig. 2 –

- Fig. 3 -

EP 0 297 488 A2

— Fig. 4 —

— Fig. 5 —

EP 0 297 488 A2

- Fig . 6 -

69